# EUROPÄISCHE PATENTSCHRIFT

(11) **EP 2 147 228 B1**
(45) Veröffentlichungstag und Bekanntmachung des Hinweises auf die Patenterteilung: **25.06.2014**
(21) Anmeldenummer: 08735189.6
(22) Anmeldetag: 11.04.2008
(51) Int. Cl.: F16F 9/53

(54) **DÄMPFUNGSVORRICHTUNG MIT FELDSTEUERBARER FLÜSSIGKEIT**
ATTENUATION DEVICE HAVING A FIELD-CONTROLLABLE FLUID
DISPOSITIF DE VAPORISATION D'UN LIQUIDE À CHAMP RÉGLABLE

(30) Priorität: 13.04.2007 DE 102007017589
(43) Veröffentlichungstag der Anmeldung: 27.01.2010
(73) Patentinhaber: Fraunhofer-Gesellschaft zur Förderung der angewandten Forschung e.V., 80686 München (DE)
(72) Erfinder: BÖSE, Holger, 97080 Würzburg (DE); GERLACH, Thomas, 97422 Schweinfurt (DE); PROBST, Jörn, 97273 Kürnach (DE)
(74) Vertreter: Pfenning, Meinig & Partner GbR
(86) Internationale Anmeldenummer: PCT/EP2008/002899
(87) Internationale Veröffentlichungsnummer: WO 2008/125305

(56) Entgegenhaltungen:
- EP-A- 1 070 872
- EP-A- 1 247 664
- US-A- 5 158 109
- US-A- 6 095 295
- US-B1- 6 279 702

## Beschreibung

Die vorliegende Erfindung betrifft eine Dämpfungsvorrichtung, insbesondere einen Stoßdämpfer oder einen Schwingungsdämpfer, mit einer feldsteuerbaren Flüssigkeit (magnetorheologische und/oder elektrorheologische Flüssigkeit). Die Erfindung betrifft darüberhinaus ein Dämpfungsverfahren, bei dem eine solche Dämpfungsvorrichtung zum Einsatz kommt sowie die Verwendung einer solchen Dämpfungsvorrichtung.

Magnetorheologische Flüssigkeiten (MRF) sind Suspensionen von magnetisch polarisierbaren Teilchen in einer Trägerflüssigkeit, deren Viskosität und andere rheologische Eigenschaften in einem Magnetfeld schnell und reversibel verändert werden können. In Analogie dazu sind elektrorheologische Flüssigkeiten (ERF) Suspensionen von elektrisch polarisierbaren Teilchen in einer nicht-leitenden Trägerflüssigkeit, deren rheologische Eigenschaften in einem elektrischen Feld schnell und reversibel verändert werden können. Beide Klassen von Flüssigkeiten bieten damit eine ideale Grundlage für adaptive Dämpfungsvorrichtungen (z.B. Stoß- oder Schwingungsdämpfer), deren Übertragungskräfte durch das Magnetfeld oder das elektrische Feld gesteuert werden.

Magnetorheologische Flüssigkeiten, wie sie in der vorliegenden Erfindung zum Einsatz kommen können, sind in der deutschen Patentschrift DE 10 2004 041 650 B4 beschrieben, welche hiermit in vollem Umfang als Bestandteil der vorliegenden Anmeldung eingeführt wird.

Aus dem Stand der Technik sind bereits Dämpfungsvorrichtungen bekannt, bei denen eine Dämpfungskraft durch eine magnetorheologische oder elektrorheologische Flüssigkeit in einem magnetischen bzw. in einem elektrischen Feld erzeugt wird. Ein Vorteil solcher Dämpfungsvorrichtungen liegt in der kurzen Reaktionszeit auf eine Änderung der Feldstärke. So beschreibt die DE 20 2004 008 024 U1 einen Bewegungsdämpfer, welcher aus einer Steuer- und einer Arbeitseinheit besteht, wobei die Arbeitseinheit ein steuerbares Ventil aufweist und wobei die Steuereinheit eine magnetorheologische Flüssigkeit enthält. Die gezeigte Vorrichtung weist in der Steuereinheit einen Schubkolben auf, der die magnetorheologische Flüssigkeit durch einen Spalt hindurchdrückt, in welchem ein Magnetfeld angelegt wird. Hierdurch wird der Strömungswiderstand der magnetorheologischen Flüssigkeit drastisch erhöht. Es handelt sich bei dieser Fließbewegung der magnetorheologischen Flüssigkeit durch den Spalt somit um ein magnetorheologisches Ventil. Ein solches Ventil kann jedoch durch die Partikel in der magnetorheologischen Flüssigkeit ganz oder teilweise verstopfen, wodurch die Steuerbarkeit beeinträchtigt wird oder sogar verloren geht. Darüberhinaus ist ein solches Fließsystem mit Querschnittsveränderungen und/oder Umlenkungen der Strömungsrichtung der magnetorheologischen Flüssigkeit und damit einhergehenden Strömungswiderständen verbunden. Durch den Fluss der magnetorheologischen Flüssigkeit durch das magnetorheologische Ventil kann es an diesen Stellen zu Ablagerungen von Partikeln aus der magnetorheologischen Flüssigkeit (MRF) kommen, wodurch die Funktionsfähigkeit des Dämpfers beeinträchtigt wird. Dokument US 51 58 109 offenbart einen Schwingungsdämpfer

mit einem elektrorheologischen ventil. Aufgabe der vorliegenden Erfindung ist es daher, eine Dämpfungsvorrichtung (und ein entsprechendes Dämpfungsverfahren) zur Verfügung zu stellen, welche die vorstehend beschriebenen Nachteile des Standes der Technik vermeidet, mit welcher insbesondere auf mechanisch einfache, zuverlässige Art und Weise eine feldsteuerbare Dämpfung realisierbar ist.

Diese Aufgabe wird durch eine Dämpfungsvorrichtung nach Anspruch 1, durch eine Dämpfungsvorrichtung nach Anspruch 2 sowie durch ein Dämpfungsverfahren nach Anspruch 22 gelöst. Vorteilhafte Ausgestaltungen der erfindungsgemäßen Dämpfungsvorrichtungen ergeben sich aus den jeweils abhängigen Patentansprüchen. Eine erfindungsgemäße Verwendung ist im Anspruch 23 beschrieben.

Nachfolgend wird die nachfolgende Erfindung nun zunächst generell beschrieben, dieser generellen Beschreibung schließen sich sodann einzelne Ausführungsbeispiele an. Einzelne erfindungsgemäße Merkmale, wie sie nachfolgend beschrieben werden, können hierbei nicht nur in Kombinationen, wie sie in den speziellen vorteilhaften Ausführungsbeispielen gezeigt werden, auftreten, sondern können im Rahmen der vorliegenden Erfindung auch in beliebigen anderen Kombinationen ausgebildet sein bzw. verwendet werden.

Basis der erfindungsgemäßen Lösung ist das Vorsehen zweier Oberflächen in der Steuereinheit, welche relativ zueinander bewegt werden können (entweder seitlich aneinander vorbei oder aufeinander zu- bzw. wegbewegt), so dass die magnetorheologische Flüssigkeit nicht durch ein magnetorheologisches Ventil hindurchfließen muss, sondern in einem Zwischenraum zwischen diesen beiden Oberflächen in der Steuereinheit geschert und/oder gequetscht wird. Hierbei wird in diesem Zwischenraum durch einen Felderzeuger (Magnet oder Elektroden) ein Magnetfeld oder ein elektrisches Feld erzeugt, wodurch die Feldstärke in diesem Zwischenraum in der feldsteuerbaren Flüssigkeit verändert werden kann. Im Falle der Verwendung einer magnetorheologischen Flüssigkeit und eines Magneten (Elektromagneten) befindet sich der mit der MRF gefüllte Zwischenraum somit im Magnetkreissystem der Dämpfungsvorrichtung. Analoges gilt im Falle der Verwendung von Elektroden, von einem elektrischen Feld und von einer elektrorheologischen Flüssigkeit. Wie nachfolgend noch näher beschrieben wird, kann durch eine Veränderung der magnetischen bzw. elektrischen Feldstärke eine entsprechende Veränderung der mechanischen Kopplung von zwei Steuerelementen der Steuereinheit, welche die vorbeschriebenen Oberflächen aufweisen, erfolgen. Hierdurch kann, wie nachfolgend noch genauer beschrieben, eine Relativbewegung (beispielsweise zwischen einer Kolbeneinheit und einer Verschlusseinheit oder auch zwischen einer Verschlusseinheit und einem Gehäuseelement) in der Arbeitseinheit gesteuert werden, wodurch sich der Öffnungsquerschnitt einer Durchströmungsöffnung ändern lässt, welche zwei Kammern innerhalb eines Gehäuses verbindet, welche durch einen Kolben getrennt sind. Durch einen solchermaßen veränderten Öffnungsquerschnitt kann der Fluss eines nicht-feldsteuerbaren Fluids zwischen den beiden Kammern innerhalb des Gehäuses erschwert oder erleichtert werden, wodurch sich die Bedämpfung der Kolbeneinheit innerhalb des Gehäuses entsprechend wie gewünscht anpassen lässt.

Die erfindungsgemäße Dämpfungsvorrichtung weist gegenüber den aus dem Stand der Technik bekannten Dämpfungsvorrichtungen eine Reihe erheblicher Vorteile auf:
- Bei der erfindungsgemäßen Vorrichtung ist der Einsatz eines Schubkolbens, welcher die MRF durch einen magnetfelddurchflossenen Spalt drückt (Fließsystem), nicht notwendig. Damit werden erheblich geringere Anforderungen an die Eigenschaften der magnetorheologischen Flüssigkeit gestellt und es ist ein deutlich zuverlässigerer Betrieb der Dämpfungsvorrichtung möglich. Beispielsweise kann im Grundzustand die MRF ohne Magnetfeld sehr zähflüssig sein, es können sogar anstelle einer magnetorheologischen Flüssigkeit beispielsweise nicht eigenfließfähige, magnetorheologische Gele eingesetzt werden. Damit werden Probleme vermieden, welche aufgrund einer Sedimentation der magnetischen Partikel in der MRF auftreten.
- Ein weiterer Vorteil ist, dass bei der erfindungsgemäßen Dämpfungsvorrichtung auch kein mechanisch komplexes System realisiert wird (wie es z.B. in der DE 20 2004 008 024 U1 durch Ausgestaltung der Steuereinheit mit einem Schubkolben, mit separaten Fließkanälen für die MRF und mit einer zusätzlichen, hinsichtlich einer Überlastung (Reißen) anfälligen Membran, welche zur Verbindung mit der Arbeitseinheit notwendig ist, notwendig ist, realisiert wurde).
- Die beiden in der vorliegenden Erfindung verwendeten, gegeneinander beweglichen Oberflächen können durch die im Magnetfeld bzw. elektrischen Feld erstarrte MRF bzw. elektrorheologische Flüssigkeit im Zwischenraum zwischen den Oberflächen mechanisch aneinander gekoppelt werden. Hiermit ist eine einfache und zuverlässige Fixierung des Öffnungsquerschnitts des Ventils in der Arbeitseinheit möglich.
- Ein weiterer Vorteil der vorliegenden Erfindung liegt ganz generell in der Trennung in eine Steuer- und eine Arbeitseinheit, wodurch eine kleine in der Steuereinheit generierte Kraft eine große Dämpfungskraft in der Arbeitseinheit erzeugen kann. Hierdurch muss die relativ schwere, die MRF enthaltende Einheit nicht so groß ausgelegt werden. Dies ist mit einem geringeren Energiebedarf verbunden; außerdem ist durch dieses Prinzip eine niedrige Grunddämpfung in der Arbeitseinheit möglich, so dass sich insgesamt ein sehr hoher Faktor zwischen der maximalen und der minimalen Dämpfungskraft ergibt.

Anwendungsfelder der erfindungsgemäßen Dämpfungsvorrichtung bzw. Kraftübertragungsvorrichtung sind insbesondere elektrisch steuerbare Stoßdämpfer und Schwingungsdämpfer, bei denen die Dämpfungskraft über den Öffnungsquerschnitt des Ventils in der Arbeitseinheit verändert wird, wobei der Öffnungsquerschnitt durch das Magnetfeld oder das elektrische Feld in der Steuereinheit gesteuert wird.

Die vorliegende Erfindung beschreibt somit eine Dämpfungsvorrichtung, welche sich im wesentlichen in zwei Einheiten, eine Steuereinheit und eine Arbeitseinheit, einteilen lässt. In der Steuereinheit, welche die magnetorheologische oder die elektrorheologische Flüssigkeit enthält, werden die beiden gegeneinander beweglichen Oberflächen, zwischen denen sich im Zwischenraum die MRF bzw. die elektrorheologische Flüssigkeit befindet, durch Anlegen eines magnetischen bzw. elektrischen Feldes (welches dann den Zwischenraum überstreicht) mechanisch miteinander gekoppelt. Je nach Feldstärke können die beiden Oberflächen mehr oder weniger leicht relativ zueinander bewegt werden. Nach dem Abschalten des Feldes können beide Oberflächen wieder vollständig ohne einen felderzeugten Widerstand zueinander bewegt werden, wobei in Bezug auf die magnetorheologische oder elektrorheologische Flüssigkeit eine Scherbewegung und/oder eine Quetschbewegung erfolgt.

In der zweiten Einheit, der Arbeitseinheit, welche eine nicht-feldsteuerbare Flüssigkeit (oder auch ein Gas) enthält, wird die zu dämpfende Kraft auf eine Kolbeneinheit bzw. einen beweglichen Kolben ausgeübt. Bei der Bewegung des Kolbens bzw. der Kolbeneinheit wird die nicht-feldsteuerbare Flüssigkeit durch eine Öffnung (Durchströmungsöffnung) zwischen zwei durch den Kolben voneinander getrennte Kammern transportiert, wobei der Öffnungsquerschnitt der Durchströmungsöffnung und damit der Strömungswiderstand durch die Bewegung einer Verschlusseinheit (beispielsweise eines Stößels) verändert werden kann.

Vorteilhafterweise können hierbei die Kolbeneinheit und die relativ dazu bewegliche Verschlusseinheit mechanisch starr mit den beiden Oberflächen bzw. mit den beiden Steuerelementen in der Steuereinheit verbunden werden, zwischen denen sich im Zwischenraum die magnetorheologische oder elektrorheologische Flüssigkeit befindet. Eine andere vorteilhafte Möglichkeit besteht darin, dass lediglich die Verschlusseinheit mit einer der beiden Oberflächen bzw. mit einem der beiden Steuerelemente in der Steuereinheit mechanisch starr verbunden ist, die sich relativ zur anderen Oberfläche bewegt und dabei die sich in dem Zwischenraum zwischen den Oberflächen befindliche feldsteuerbare Flüssigkeit schert und/oder quetscht.

Vorteilhafterweise weist somit die erfindungsgemäße Dämpfungsvorrichtung eine Steuereinheit, welche ein magnetorheologisches oder ein elektrorheologisches Material enthält, auf, sowie eine Arbeitseinheit, die ein nicht-feldsteuerbares Medium (Flüssigkeit oder Gas) enthält. Hierbei umfasst die Steuereinheit mindestens zwei gegeneinander bewegliche-Oberflächen, zwischen denen das magnetorheologische oder elektrorheologische Material einer Scherbewegung und/oder einer Quetschbewegung unterzogen wird, sowie eine Magnetfelderzeugung (Magnetkreis), die das magnetorheologische Material zwischen den Oberflächen versteift (alternativ dazu ist eine elektrische Felderzeugung, die das elektrorheologische Material zwischen den Oberflächen versteift, möglich). Die Arbeitseinheit weist einen Dämpfungskolben auf, der die zwei Kammern voneinander trennt, die durch ein aus mindestens zwei gegeneinander beweglichen Teilen gebildetes Ventil mit variablem Öffnungsquerschnitt miteinander verbunden sind. Mindestens eines der gegeneinander beweglichen Teile des Ventils in der Arbeitseinheit ist hierbei mit mindestens einer der gegeneinander beweglichen Oberflächen in der Steuereinheit mechanisch starr verbunden.

Vorteilhafterweise werden die beiden gegeneinander beweglichen Oberflächen der Steuereinheit bzw. die entsprechenden Steuerelemente durch zwei konzentrisch ineinander geschobene Zylinderelemente (Rohre) oder durch zwei planparallele Platten, welche parallel zueinander angeordnet sind und seitlich gegeneinander verschoben werden können oder aufeinander zu und voneinander weg bewegt werden können, gebildet. Die Kolbeneinheit kann vorteilhafterweise so ausgestaltet sein, dass der Kolben in der Arbeitseinheit eine Linearschwingung ausführt. Das magnetische bzw. elektrische Feld verläuft hierbei vorteilhafterweise senkrecht zu den beiden Oberflächen der Steuerelemente und durchdringt den Spalt zwischen den Oberflächen bzw. den Zwischenraum. Wird eine magnetorheologische Flüssigkeit verwendet, so befinden sich die gegeneinander beweglichen Oberflächen vorteilhafterweise in einem Magnetkreis mit einer Spule, wobei der in der Spule fließende Strom das Magnetfeld erzeugt. Im Fall einer elektrorheologischen Flüssigkeit bilden vorteilhafterweise die beiden gegeneinander beweglichen Oberflächen auch die Elektroden, zwischen denen das elektrische Feld ausgebildet wird. Durch das magnetische bzw. elektrische Feld werden die gegeneinander beweglichen Oberflächen über die versteifte magnetorheologische bzw. elektrorheologische Flüssigkeit kraftschlüssig miteinander verbunden, so dass bei ausreichend hoher Feldstärke die Beweglichkeit der beiden Oberflächen gegeneinander aufgehoben wird. Wenn ein ausreichend hohes Feld angelegt ist, erfolgt somit eine Versteifung der feldsteuerbaren Flüssigkeit und eine feste Kopplung der beiden Steuerelemente bzw. Oberflächen.

Es ist jedoch in einer anderen vorteilhaften Ausgestaltung auch möglich, die erfindungsgemäße Dämpfungsvorrichtung auf Basis einer Drehkolbeneinheit aufzubauen. Es wird dann eine Drehschwingung gedämpft, bei der ebenfalls eine Steuer- und eine Arbeitseinheit in der Dämpfungsvorrichtung realisiert werden. Wie beim Lineardämpfer wird entsprechend in der Arbeitseinheit die Bewegung eines Drehkolbens durch das Hindurchströmen der durch den Drehkolben verdrängten, nicht feldsteuerbaren Flüssigkeit durch einen Spalt (Durchströmungsöffnung bzw. Ventilspalt) gedämpft. Der Querschnitt der Durchströmungsöffnung ist veränderbar, wobei mindestens eines der den Spalt bildenden gegeneinander beweglichen Teile vorteilhafterweise mit einer der gegeneinander beweglichen Oberflächen in der Steuereinheit mechanisch starr verbunden ist. Die beiden Oberflächen in der Steuereinheit, zwischen denen sich die magnetorheologische oder elektrorheologische Flüssigkeit in einem Zwischenraum befindet, sind ebenso wie beim Lineardämpfer in einen Magnetkreis integriert bzw. dienen als Elektroden zur Erzeugung des elektrischen Feldes.

Eine weitere vorteilhafte Möglichkeit besteht darin, dass die beiden gegeneinander beweglichen Teile, die den Öffnungsquerschnitt des Ventils in der Arbeitseinheit bestimmen (Kolbeneinheit und Verschlusseinheit im Falle der Linearschwingung des Kolbens bzw. Gehäuseelement und Verschlusseinheit im Falle der Drehschwingung des Kolbens) durch eine Feder in einer Gleichgewichtspositiön zueinander gehalten werden. Damit wird eine Voreinstellung der Dämpfungskraft ohne angelegtes Feld (Arbeitspunkt des Dämpfers) bestimmt.

Vorteilhafterweise kann darüberhinaus ein Sensor vorgesehen werden, der die Relativposition der beiden gegeneinander beweglichen Teile des Ventils in der Arbeitseinheit zueinander erfasst. Hiermit kann der Öffnungsquerschnitt des Ventils detektiert werden. Vorteilhafterweise ist dann desweiteren ein Regelkreis vorzusehen, in welchem auf Basis der erfassten Relativpositionswerte zunächst der Öffnungsquerschnitt bestimmbar ist und auf Basis des bestimmten Öffnungsquerschnitts dann die Feldstärke des magnetischen und/oder des elektrischen Feldes im Zwischenraum regelbar ist (Anpassung der aktuellen Dämpfungseigenschaften).

In einer weiteren vorteilhaften Ausgestaltungsvariante ist es möglich, im Magnetkreis der Steuereinheit mindestens einen Permanentmagneten neben einem Elektromagneten vorzusehen. Durch eine solche Integration eines zusätzlichen Permanentmagneten, der ebenfalls in der Steuereinheit das Magnetfeld für die magnetorheologische Flüssigkeit im Zwischenraum beeinflusst, kann ein Öffnungsquerschnitt des Ventils in der Arbeitseinheit ohne Energieaufwand fixiert werden (Einstellung des Arbeitspunktes der Dämpfungsvorrichtung; es ist eine mechanische Kopplung der beiden 0-berflächen ohne Stromfluss in der Spule des Elektromagneten möglich).

Weitere vorteilhafte Ausgestaltungsvarianten bestehen darin, dass als feldsteuerbares Material anstatt einer MRF ein magnetorheologisches Gel (MRG), ein magnetorheologisches Elastomer (MRE) oder ein magnetorheologischer Schaum (MRS) oder eine Kombination aus solchen Materialien verwendet wird. Ein MRG ist hierbei ein Material, welches im Gegensatz zu einer MRF zwar weich, aber nicht flüssig ist. In Analogie zu einer MRF kann es irreversibel beliebig deformiert werden und sich im Magnetfeld analog zu einer MRF versteifen. Ein MRE ist ein vernetztes Material, welches daher eine vorgegebene Form aufweist, aus der es reversibel nur begrenzt deformiert werden kann. Ein MRS ist ein Elastomerschaum, dessen Poren mit einer MRF gefüllt sind. Wie das MRE weist auch ein MRS eine vorgegebene Form auf, aus der er reversibel nur begrenzt deformiert werden kann. Im Falle von MRE oder MRS kann durch die Elastizität des Materials gleichzeitig eine Rückstellkraft zwischen den gegeneinander beweglichen Oberflächen erzeugt werden, die diese nach dem Abschalten des Magnetfelds wieder in ihre jeweilige Ausgangsposition zurückstellt.

In einer weiteren vorteilhaften Ausgestaltungsvariante kann als feldsteuerbares Material anstatt einer elektrorheologischen Flüssigkeit ERF ein elektrorheologisches Gel (ERG), ein elektrorheologisches Elastomer (ERE) oder ein elektrorheologischer Schaum (ERS) verwendet werden. Diese Materialien sind ganz analog definiert wie die entsprechenden magnetorheologischen Materialien bzw. weisen die Eigenschaften der entsprechenden magnetorheologischen Materialien auf.

Eine besonders vorteilhafte Auswahl der nicht-feldsteuerbaren Flüssigkeit in der Arbeitseinheit liegt darin, die gleiche Flüssigkeit, die auch als Trägerflüssigkeit in der magnetorheologischen oder elektrorheologischen Flüssigkeit eingesetzt wird, auch als nicht-feldsteuerbare Flüssigkeit zu verwenden.

Anstelle des Einsatzes einer nicht-feldsteuerbaren Flüssigkeit kann auch ein Gas in der Arbeitseinheit verwendet werden.

Nachfolgend wird die nachfolgende Erfindung an einzelnen Ausführungsbeispielen beschrieben. In den einzelnen Figuren, welche zu den Ausführungsbeispielen gehören, sind hierbei gleiche oder sich entsprechende Elemente der Dämpfungsvorrichtung mit identischen Bezugszeichen bezeichnet.

Es zeigen:
- Figur 1: eine erfindungsgemäße Dämpfungsvorrichtung, welche als Linearschwingungsvorrichtung ausgebildet ist.
- Figur 2: eine zweite erfindungsgemäße Linearschwingungsvorrichtung.
- Figur 3: eine dritte erfindungsgemäße Linearschwingungsvorrichtung.
- Figur 4: eine erfindungsgemäße Dämpfungsvorrichtung, welche als Drehschwingungsvorrichtung ausgebildet ist.

### Ausführungsbeispiel 1:

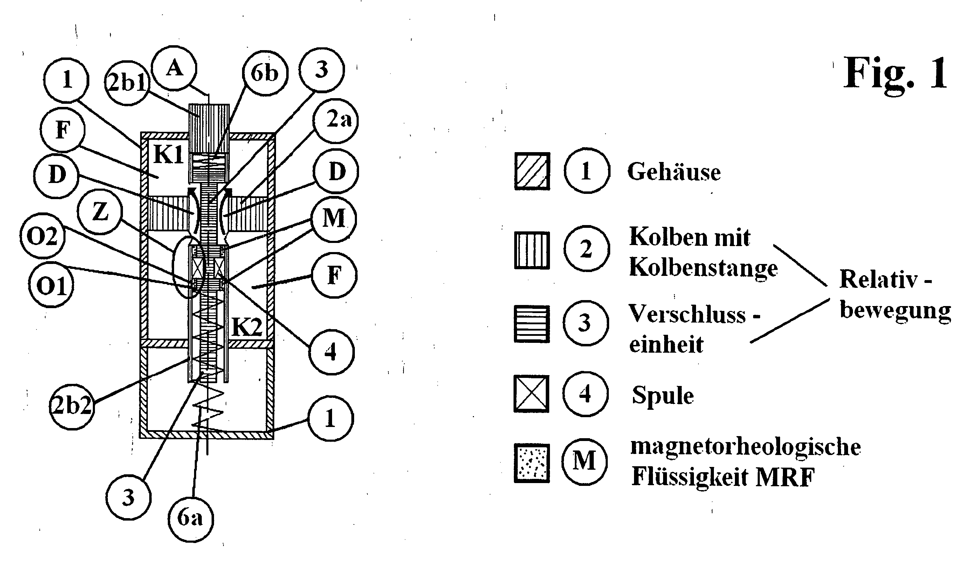

Figur 1 zeigt eine erfindungsgemäße Dämpfungsvorrichtung, welche als Linearschwingungseinheit aufgebaut ist. Die Dämpfungsvorrichtung umfasst ein Gehäuse 1. In diesem Gehäuse 1 ist eine Kolbeneinheit 2 angeordnet. Die Kolbeneinheit 2 ist innerhalb des Gehäuses 1 längs einer Symmetrieachse A des Gehäuses 1, also relativ zum Gehäuse 1 bewegbar. Gehäuse 1 und Kolbeneinheit 2 bilden hierbei konzentrisch ineinander angeordnete Zylindereinheiten. Figur 1 zeigt einen Schnitt durch die zentrale Symmetrieachse A in Längsrichtung dieser Einheit. Die Vorrichtung ist rotationssymmetrisch um die Längsachse A. Das Gehäuse 1 besteht aus zwei in Richtung der Achse A angrenzend aneinander angeordneten Gehäuseteilen: Im oberen Bereich aus einem ersten Gehäuseteil 1a, in dem zwei Kammern K1 und K2 von dem Kolben 2a der Kolbeneinheit 2 getrennt werden, und im unteren Bereich aus einem zweiten Gehäuseteil 1b, in das wie nachfolgend noch näher beschrieben ein Teil der Kolbeneinheit 2 einragt. Die Kolbeneinheit besteht hierbei aus drei Elementen: Zunächst einem oberen Kolbenstangenteil 2b1, welcher teilweise innerhalb des oberen Gehäuseteils und teilweise außerhalb des oberen Gehäuseteils angeordnet ist (die obere Zylinderdeckelfläche des oberen Gehäuseteils umschließt diesen Teil 2b1 abdichtend, so dass die Kammern K1 und K2 einen Raum ausbilden, welcher durch das Gehäuse 1 und den oberen Kolbenstangenteil nach außen abgedichtet ist. Mit dem oberen Kolbenstangenteil 2b1 ist (nicht gezeigt) der Kolben 2a mechanisch starr verbunden. Dieser ist so konzentrisch innerhalb des oberen Gehäuseteils angeordnet, dass er die obere Kammer K1 bis auf die später noch beschriebene Durchströmungsöffnung D vollständig von der unteren Kammer K2 abschließt. Auf der dem Teil 2b1 gegenüberliegenden Seite des Kolbens 2a ist mit letzterem mechanisch starr verbunden (nicht gezeigt) der untere Kolbenstangenteil 2b2 angeordnet. Dieser wird von der unteren Deckelfläche des oberen Gehäuseteils 1 abdichtend umschlossen, so dass der obere Teil des unteren Kolbenstangenteils 2b2 teilweise in die Kammer K2 ragt und teilweise von der Unterseite der unteren Zylinderdeckelfläche des oberen Gehäuseteils in das untere Gehäuseteil ragt. Die untere Zylinderdeckelfläche des oberen Gehäuseteils umschließt den Kolbenstangenteil 2b2 abdichtend derart, dass die beiden Kammern K1 und K2 gas- bzw. flüssigkeitsdicht gegen den unteren Teil des Gehäuses 1 abgedichtet sind.

Durch eine Verschiebung der die drei Elemente 2a, 2b1 und 2b2 aufweisenden Kolbeneinheit relativ zum Gehäuse 1 wird das relative Volumenverhältnis der beiden Kammern K1 und K2 (bei konstantem Gesamtvolumen dieser beiden Kammern) geändert, so dass eine die beiden Kammern K1 und K2 sowie die Durchströmungsöffnung D ausfüllende, nicht-magnetorheologische Flüssigkeit F durch die Kolbenbewegung des Kolbens 2a durch die Durchströmungsöffnung D von der einen Kammer in die andere Kammer geleitet wird.

Konzentrisch innerhalb der Kolbeneinheit 2 und abschnittsweise abdichtend von den beiden als Hohlzylinder ausgebildeten Kolbenstangenteilen 2b1 und 2b2 umfasst, ist eine Verschlusseinheit 3 angeordnet. Diese Verschlusseinheit 3 ist ebenfalls wie die Kolbeneinheit 2 rotationssymmetrisch aufgebaut und rotationssymmetrisch um die Zentralachse A angeordnet. Diese Verschlusseinheit 3 befindet sich somit innerhalb des Gehäuses eingeschoben in der Kolbeneinheit 2 und ist relativ zur Kolbeneinheit 2 (und auch relativ zum Gehäuse 1) entlang der Achse A beweglich. Durch die Relativbewegung von Kolbeneinlieit 2 und Verschlusseinheit 3 wird aufgrund einer geeigneten sektionsweisen Unterteilung der Verschlusseinheit 3 entlang der Achse A in Zylinderabschnitte mit unterschiedlichem Radius zusammen mit den Elementen 2a, 2b1 und 2b2 der Kolbeneinheit ein Ventil ausgebildet, welches die Durchströmungsöffnung D zwischen den beiden Kammern K1 und K2 bildet. Die Ausgestaltung erfolgt hierbei so, dass eine Veränderung der relativen Position von Kolbeneinheit 2 und Verschlusseinheit 3 zueinander entlang der Achse A den Öffnungsquerschnitt der Durchströmungsöffnung D verändert.

In demjenigen Teil der Verschlusseinheit 3, welcher wie in der Figur dargestellt, in den unteren Abschnitt 2b2 der Kolbeneinheit 2 eingeschoben ist, weist nun die Verschlusseinheit 3 entlang der Achse A zwei zylinderförmige Abschnitte auf, welche einen geringeren Außendurchmesser aufweisen als der Innendurchmesser des unteren Kolbenstangenteils 2b2. Zwischen diesen beiden Zylinderelementen befindet sich die Spulenwicklung 4 eines Elektromagneten, welcher in Form eines Torus rotationssymmetrisch um die Achse A innerhalb des unteren Kolbenstangenteils 2b2 so angeordnet ist, dass mit ihm im Zwischenraum Z (welcher aufgrund der unterschiedlichen Außendurchmesser der beiden zylinderförmigen Abschnitte und der inneren Wandfläche des unteren Kolbenstangenteils 2b2 zwischen diesen zylinderförmigen Abschnitten und dieser inneren Wandfläche ausgebildet ist) ein Magnetfeld erzeugbar ist. Wird mittels des Elektromagneten 4 ein solches Magnetfeld erzeugt, so verlaufen die Magnetfeldlinien im Bereich des Zwischenraums Z senkrecht zu der Außenwandfläche der beiden zylinderförmigen Abschnitte der Verschlusseinheit 3 und senkrecht zur Innenwandfläche der diese zylinderförmigen Abschnitten konzentrisch umgebenden unteren Kolbenstangeneinheit 2b2. Im gezeigten Fall ist der Magnet 4 zwischen den beiden zylinderförmigen Abschnitten der Verschlusseinheit 3 auf Höhe des unteren Kolbenstangenteils 2b2 fest mit der Verschlusseinheit 3 verbunden.

Dieser Zwischenraum Z ist nun mit einer magnetorheologischen Flüssigkeit M angefüllt. Die Innenwandfläche der unteren Kolbenstangeneinheit 2b2 auf Höhe der beiden zylinderförmigen Abschnitte (entlang der Achse A) bildet hierbei die zweite Oberfläche O2, welche auf dem zweiten Steuerelement ausgebildet ist. Die Außenfläche der beiden zylinderförmigen Abschnitte der Verschlusseinheit 3 bildet-hierbei die erste Oberfläche O1, welche auf dem ersten Steuerelement ausgebildet ist. Somit ist das erste Steuerelement hier als Teil (zwei Zylinderabschnitte) der Verschlusseinheit 3 ausgebildet und somit aufgrund dieser Ausbildung auch mechanisch mit der Verschlusseinheit 3 verbunden. Ebenso bildet die zweite Oberfläche 02 bzw. das zweite Steuerelement einen Teil der unteren Kolbenstangeneinheit 2b2 aus.

Die gezeigte.Dämpfungsvorrichtung weist darüberhinaus zwei als Zug-Druck-Federn ausgestaltete Federeinheiten 6a und 6b auf. Die Federeinheit 6a verbindet hierbei den unteren Zylinderdeckel des unteren Gehäuseteils des Gehäuses 1 mit dem unteren Abschnitt der Verschlusseinheit 3, welcher im Bereich der unteren Kolbenstangeneinheit 2b2 angeordnet ist. Die zweite Feder 6b verbindet den oberen Abschnitt der Verschlusseinheit 3 (welcher innerhalb der oberen Kolbenstangeneinheit 2b1 angeordnet ist) mit der der Einheit 2b2 zugewandten Seite (Innenseite bzw. Unterseite U) des oberen Abschlusselements der Kolbenstangeneinheit 2b1. Mittels dieser beiden Federn 6a und 6b wird die relative Lage der Verschlusseinheit 3 zur Kolbeneinheit 2 so eingestellt (Arbeitspunkt des Dämpfers), dass der Öffnungsquerschnitt der Durchströmungsöffnung D maximal ist. Durch Auslenkung der Verschlusseinheit 3 (relativ zur Kolbeneinheit 2) aus dieser Gleichgewichtslage, lässt sich somit der Öffnungsquerschnitt der Durchströmungsöffnung D verkleinern.

Dies geschieht wie nun beschrieben mit Hilfe eines angelegten Magnetfeldes im Zwischenraum Z und mit Hilfe der dort befindlichen MRF: Bei ausgeschaltetem Magnetfeld und bei einer Bewegung der Kolbeneinheit 2 nach unten kann beispielsweise die Verschlusseinheit 3 aufgrund ihrer Trägheit der Kolbeneinheit 2 nicht mehr folgen. Hierdurch verringert sich der Querschnitt der Durchströmungsöffnung D entsprechend. Wird dann zum geeigneten Zeitpunkt ein Magnetfeld ausreichender Stärke im Zwischenraum Z erzeugt, so dass sich die MRF versteift, so werden die beiden Elemente 2 und 3 über die MRF fest kraftschlüssig miteinander verkoppelt. Es ist dann keine Relativbewegung von Kolbeneinheit 2 und Verschlusseinheit 3 mehr möglich, so dass der Öffnungsquerschnitt der Durchströmungsöffnung D konstant auf einem Wert, welcher geringer als der maximale Öffnungsquerschnitt ist, verbleibt. Die Strömung des Fluids F zwischen den beiden Kammern K1 und K2 wird somit erschwert, wodurch sich eine stärkere Bedämpfung der Dämpfungsvorrichtung ergibt.

Diese Ausgestaltungsform zeigt somit eine Dämpfungsvorrichtung mit magnetorheologischer Flüssigkeit unter einer Scherbewegung im Zwischenraum Z, wobei zwei gegeneinander bewegliche Teile des Ventils in der Arbeitseinheit (Kolben 2a sowie diesem zugewandte Abschnitte der Stangenteile 2b1 und 2b2 und oberer Bereich der Verschlusseinheit 3) mit den zwei gegeneinander beweglichen Steuerelementen bzw. Oberflächen in der Steuereinheit (Oberflächenbereich 02 der unteren Kolbenstangeneinheit 2b2 und diesem gegenüberliegender Oberflächenbereich O1 der Verschlusseinheit 3) jeweils mechanisch starr verbunden sind. Die Verschlusseinheit 3 kann sich somit relativ zur Einheit aus Kolben und Kolbenstange bewegen. Die Verschlusseinheit 3 ist durch die Federn 6a, 6b, welche diese Relativbewegung beeinflussen, sowohl mit der Kolbenstange 2b als auch mit dem Gehäuse 1 verbunden. Durch die Relativbewegung der Elemente 2 und 3 wird der Öffnungsquerschnitt des Ventils verändert. Durch Versteifung der MRF im Zwischenraum Z zwischen der äußeren Oberfläche des Verschlusselements 3 und der inneren Oberfläche der unteren Kolbenstangeneinheit 2b2 können die beiden Elemente 2, 3 starr gekoppelt werden. Damit wird deren Relativbewegung unterbunden und der Öffnungsquerschnitt des Ventils bleibt konstant. Die MRF wird in diesem Beispiel im Schermodus eingesetzt.

### Ausführungsbeispiel 2:

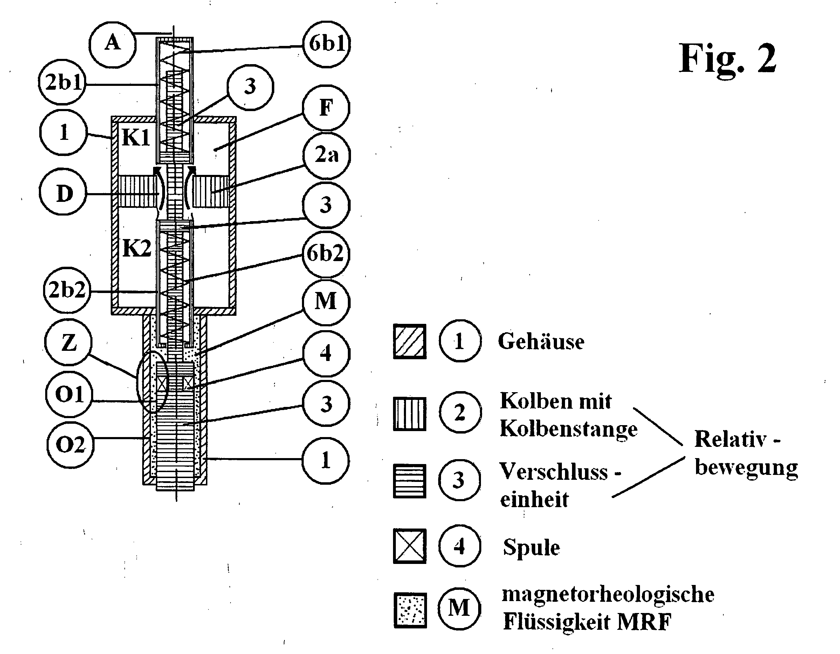

Figur 2 zeigt eine Lineardämpfungseinheit, welche bis auf die nachfolgend beschriebenen Unterschiede so aufgebaut ist, wie die in Figur 1 gezeigte Einheit. Das Gehäuse 1 besteht hier aus einem oberen Gehäuseteil 1a (Arbeitseinheit), in welchem der Kolben 2a angeordnet ist, und einem unteren Gehäuseteil 1b (Steuereinheit). In das obere Gehäuseteil 1a ragen der obere Abschnitt des unteren Stangenteils 2b2 und der untere Abschnitt des oberen Stangenteils 2b1 ein und in diesem Gehäuseteil 1a ist der obere Bereich der Verschlusseinheit 3 angeordnet. In dem unteren Gehäuseteil 1b, in welches der untere Abschnitt der unteren Kolbenstangeneinheit 2b2 einragt, ist der untere Bereich der Verschlusseinheit 3 angeordnet. Im unteren Gehäuseteil 1b ist auch die magnetorheologische Flüssigkeit MRF bzw. M untergebracht. In diesem Fall weist die Verschlusseinheit 3 im Bereich unterhalb der unteren Kolbenstangeneinheit 2b2 einen Abschnitt auf, welcher die Spule des Elektromagneten 4 und die beidseits davon angeordneten Zylinderabschnitte, welche das erste Steuerelement bzw. die erste Oberfläche O1 ausbilden, umfasst. Das zweite Steuerelement bzw. die zweite Oberfläche 02 wird hier durch die diesen Abschnitt der Verschlusseinheit 3 konzentrisch umgebende Innenwandfläche des unteren Gehäuseteils 1 ausgebildet. Zwischen dieser Innenwandfläche und dem unteren Abschnitt der Verschlusseinheit 3 befindet sich der Zwischenraum Z, welcher wie vorbeschrieben mit der magnetorheologischen Flüssigkeit M ausgefüllt ist.

Somit zeigt auch diese Figur ein Ausführungsbeispiel mit einer magnetorheologischen Flüssigkeit unter Scherung, wobei hier jedoch lediglich ein beweglicher Teil des Ventils in der Arbeitseinheit (oberer Abschnitt der Verschlusseinheit 3) mit der relativ zum Gehäuse 1 beweglichen Oberfläche O1 in der Steuereinheit mechanisch starr verbunden ist. Die andere Oberfläche 02 bzw. das andere Steuerelement wird hierbei durch den ortsfesten Innenraumabschnitt des unteren Gehäuseteils 1 ausgebildet.

Auch hier kann die Verschlusseinheit 3 eine Relativbewegung zur Kolbeneinheit 2 ausführen. Die Verschlusseinheit 3 ist hier über zwei Federn 6b1 und 6b2 sowohl mit dem oberen Ende als auch mit dem unteren Ende der Kolbenstange 2b verbunden. Durch die Steifigkeit dieser beiden Federn 6b1, 6b2 kann ähnlich wie bei dem ersten Ausführungsbeispiel beschrieben, der Arbeitspunkt festgelegt werden. Die felderzeugende Einheit 4 ist fest mit dem unteren Abschnitt des Verschlussteils 3 verbunden. Durch eine magnetfeldabhängige Scherung der MRF, welche sich wie beschrieben zwischen der Oberfläche des unteren Abschnitts des Verschlusselements 3 und der inneren Oberfläche des unteren Gehäuseabschnitts 1 der Steuereinheit befindet, kann eine Relativbewegung des Verschlusselements 3 zu der Einheit aus Kolben und Kolbenstange erzeugt werden. Auf diese Weise wird der Öffnungsquerschnitt des Ventils beeinflusst. Wirkt kein Magnetfeld, wird das Verschlusselement 3 durch die Federn in seine Ausgangsposition bewegt.

### Ausführungsbeispiel 3:

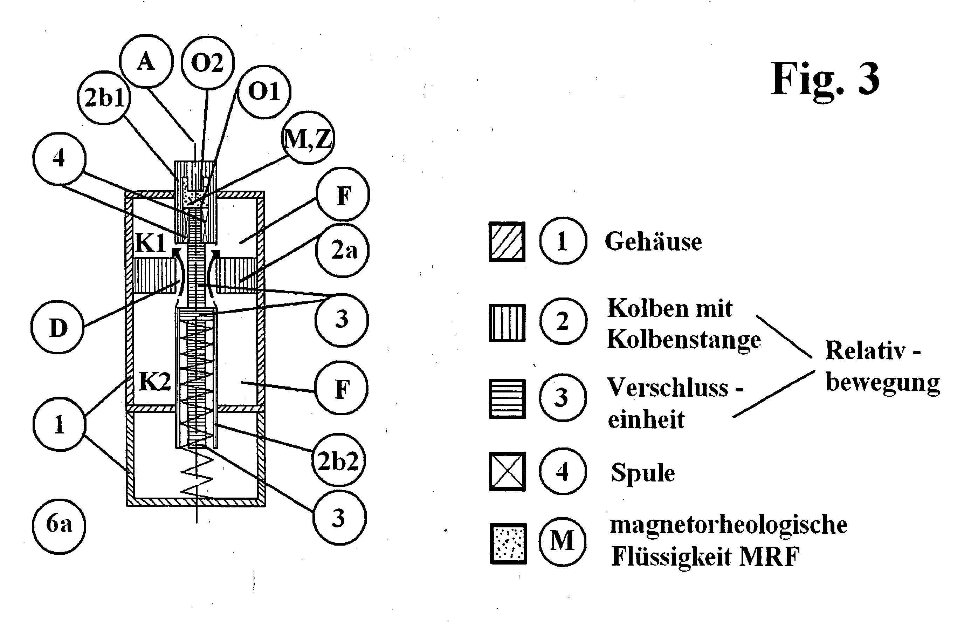

Figur 3 zeigt eine weitere erfindungsgemäße Linear-Dämpfungsvorrichtung, welche bis auf die nachfolgend beschriebenen Unterschiede ebenso wie die Ausgestaltungsform nach Figur 1 aufgebaut ist.

In diesem Fall weist der obere Abschnitt der Verschlusseinheit 3 (derjenige Abschnitt, welcher konzentrisch innerhalb der oberen Kolbenstangeneinheit 2b1 angeordnet ist) eine fest mit ihm verbundene Spule 4 eines Elektromagneten auf. Zwischen der oberen Stirnfläche der Verschlusseinheit 3 und der Spule 4 und der inneren Stirnseite der oberen Abdeckung der oberen Kolbenstangeneinheit 2b1 ist hier der mit der magnetorheologischen Flüssigkeit M angefüllte Zwischenraum Z angeordnet. Die beiden Oberflächen O1 und O2 der Steuerelemente sind somit im vorliegenden Fall senkrecht zur Zentralachse A angeordnete Stirnflächen der Kolbeneinheit 2 und der Verschlusseinheit 3. Durch die Relativbewegung der Einheiten 2 und 3 zueinander wird somit die Ausdehnung des Zwischenraums entlang der Achse A gedehnt oder gestaucht (Änderung des Abstands der Oberflächen O1 und O2 in Richtung der Oberflächennormalen).

Diese Ausgestaltungsform zeigt somit eine Lineardämpfungsvorrichtung mit einer magnetorheologischen Flüssigkeit M (alternativ dazu kann auch ein magnetorheologisches Elastomer verwendet werden) unter Quetschung, wobei jeweils eines der beiden gegeneinander bewegliche Teile des Ventils in der Arbeitseinheit (Kolben 2a und entlang der Achse A auf dieser Höhe angeordneter Abschnitt der Verschlusseinheit 3) mit jeweils einer der beiden gegeneinander beweglichen Oberflächen O1 und O2 der Steuereinheit mechanisch starr verbunden ist. Auch hier bilden Kolben und Kolbenstange eine Kolbeneinheit 2, wobei die Verschlusseinheit 3 eine Relativbewegung zu dieser Einheit ausführen kann. Durch diese Relativbewegung wird wiederum der Öffnungsquerschnitt des Ventils und damit die Dämpfung beeinflusst. Weiterhin ist der untere Abschnitt des Verschlusselements 3 über eine Feder 6a mit dem unteren Verschlussdeckel des unteren Gehäuseabschnitts des Gehäuses 1 verbunden. Diese Feder ist als Zug-Druck-Feder ausgeführt. Der obere Abschnitt des Verschlusselements 3 ist über die MRF im Zwischenraum Z mit der innenseitigen Stirnfläche der oberen Kolbenstangeneinheit 2b1 gekoppelt. Durch die Relativbewegung des Verschlusselements 3 zu der Kolbenstangeneinheit 2b1 wird die MRF zwischen den beiden Quetschoberflächen O1, 02 verdrängt bzw. gequetscht. Durch das Magnetfeld der Spule 4 kann der Widerstand gegen dieses Verdrängen beeinflusst werden und somit der Öffnungsquerschnitt des Ventils eingestellt werden. Über die Länge und die Steifigkeit der unteren Feder 6a können die Gleichgewichtslage der Ventilöffnung und die Relativbewegung zwischen Kolbeneinheit 2 und Verschlusselement 3 beeinflusst werden. Je nach Magnetfeldstärke im Zwischenraum Z ist eine Relativbewegung zwischen Kolbeneinheit 2 und Verschlusselement 3 möglich oder nicht. Hier wird somit die MRF im Quetschmodus verwendet.

### Ausführungsbeispiel 4:

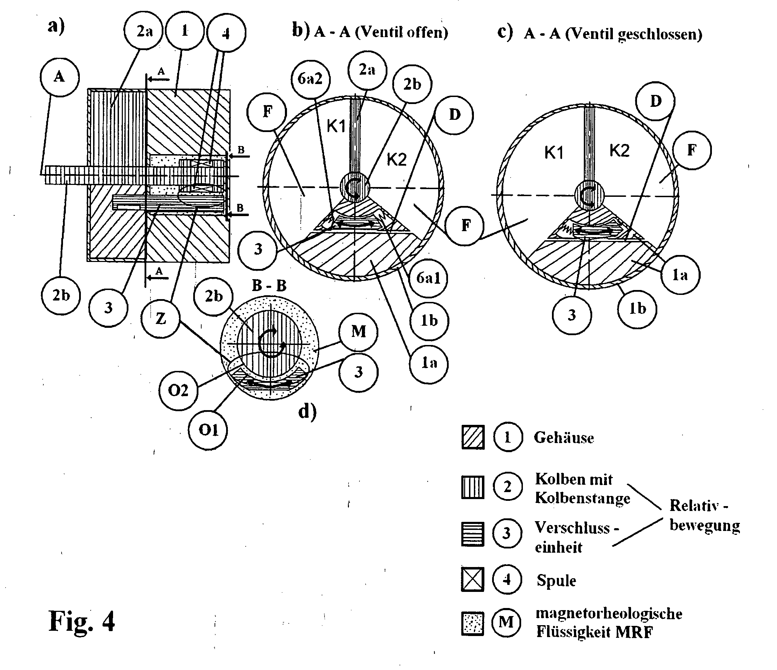

Figur 4 zeigt ein weiteres Ausführungsbeispiel einer Drehschwingungs-Dämpfungsvorrichtung gemäß der vorliegenden Erfindung. Diese Vorrichtung weist im Prinzip eine ähnliche Funktionsweise auf, wie die in der Figur 1 beschriebene Vorrichtung; identische bzw. sich entsprechende Vorrichtungselemente sind daher mit den identischen Bezugszeichen versehen.

Figur 4a zeigt hierbei einen Schnitt durch eine Ebene, in welcher die Zentralachse A (hier gleichzeitig Rotationsachse) der Drehkolbeneinheit 2 liegt. Figuren 4b und 4c zeigen einen Schnitt senkrecht zu dieser Ebene bzw. zur Rotationsachse A auf der Höhe A-A. Figur 4d zeigt einen entsprechenden Schnitt auf Höhe B-B.

Der Drehkolben 2 ist hier starr auf der Eingangswelle der Rotationsachse A befestigt und weist einen rotationssymmetrisch um die Achse A angeordneten Wellenabschnitt 2b sowie ein radialsymmetrisch davon abstehendes Flügelelement 2a auf. Je nach Stellung des Flügelelements (siehe Figuren 4b und 4c) ergeben sich unterschiedlich große Kammervolumina der beiden Kammern K1 und K2 im Gehäuse 1. Das zylinderförmige Gehäuse 1 weist hierbei ein Trennelement 1a auf (in Figuren 4b und 4c näherungsweise dreieckig dargestellt), welches die beiden Kammern K1 und K2 voneinander trennt. Dieses Element ist entlang eines Teils des Gehäuseaußenumfangs angeordnet und reicht von der Innenwandfläche des Gehäuseumfangs 1b bis zur Achse A nach innen hin. Weiterhin reicht es entlang der Achse A gesehen abdichtend bis an den Eingangswellenabschnitt 2b heran. In dem Trennelement 1a ist die Durchströmungsöffnung D als Ventilspalt ausgebildet. Durch eine Bewegung des Flügelabschnitts 2a entlang des Außenumfangs des Gehäuses 1 und innerhalb des Gehäuseinnenraums wird somit das nicht-magnetorheologische und nicht-elektrorheologische Fluid F durch Drücken durch den Ventilspalt D zwischen den beiden Kammern K1 und K2 hin und her bewegt (Änderung der Kammervolumina). Innerhalb des Trennelementes 1a ist näherungsweise konzentrisch um die Rotationsachse A und beabstandet von dieser die Verschlusseinheit 3 gelagert. Die Form dieser Lagerung bzw. der Verschlusseinheit 3 entspricht näherungsweise dem Teilabschnitt (Sektor) eines Hohlzylinders. Die Verschlusseinheit 3 ist hierbei über zwei Zug-Druck-Federn 6a1 und 6a2 mit der Lagerung im Trennelement 1a so verbunden, dass sie über einen kleinen Winkelabschnitt (Winkelsektor) um die Achse A rotierbar ist. Diese Rotation ermöglicht, dass in einer Stellung (Fig. 4c) die Öffnung D verschlossen wird und in einer anderen Stellung der Einheit 3 (Fig. 4b) der Einheit 3 die Öffnung D durchlässig ist. Hierbei wird die Verschlusseinheit 3 durch die beiden Federn 6a1 und 6a2 in einer Gleichgewichtslage gehalten (in dieser ist das Ventil geöffnet).

Das erste Steuerelement (bzw. die erste Oberfläche 01) ist hierbei als der der Achse A zugewandte Innenwandabschnitt der Verschlusseinheit 3 ausgebildet. Das zweite Steuerelement (bzw. die zweite Oberfläche 02) ist hierbei als der Achse A abgewandter Außenwandabschnitt des Eingangswellenelements 2b ausgebildet. Wie die Figur 4d zeigt, ist der Zwischenraum zwischen diesen beiden Steuerelementen mit der magnetorheologischen Flüssigkeit MRF bzw. M gefüllt. Im Bereich des Zwischenraums Z ist darüberhinaus der Elektromagneten 4 in Form eines rotationssymmetrisch um die Achse A angeordneten Torus, welcher fest mit dem Eingangswellenelement 2b verbunden ist, angeordnet.

Je nach Magnetfeldstärke im Zwischenraum Z kann somit eine mehr oder weniger starke kraftschlüssige Kopplung von Verschlusseinheit 3 und Eingangswellenabschnitt 2b-der Drehkolbeneinheit 2 realisiert werden. Durch geeignete Einstellung der Stellung der Drehkolbeneinheit 2 relativ zum Gehäuse, der Rückstellkraft der Federn 6a1 und 6a2 sowie der Feldstärke im Zwischenraum Z kann somit die relative Lage der Verschlusseinheit 3 in Bezug auf den gratförmigen Abschnitt des Gehäuses 1 verändert bzw. eingestellt werden. Durch die Beeinflussung der Anordnung der Verschlusseinheit 3 relativ zum Abschnitt 1a des Gehäuses 1 bewirkt somit die Relativbewegung von Einheit 2 und Einheit 1 je nach gewählter Feldstärke einen gewünschten Öffnungsgrad oder den Verschluss der Durchströmungsöffnung D des Ventilspalts zwischen den beiden Kammern K1 und K2. Je nach Stellung der Verschlusseinheit 3 relativ zum Gehäuse 1 wird somit eine stärkere oder eine weniger starke Bedämpfung der Drehkolbenbewegung innerhalb des Gehäuses 1 erreicht.

Im gezeigten Beispiel ist somit der Drehkolben 2a, 2b starr auf der Eingangswelle befestigt. Parallel dazu ist auf dem Eingangswellenelement 2b die Spule 4 zur Felderzeugung montiert. Durch die Drehbewegung des Flügelabschnitts 2a in der Arbeitseinheit wird die nicht-feldsteuerbare Flüssigkeit F durch den Ventilspalt D gedrückt. Die Verschlusseinheit 3 kann relativ zum Gehäuse 1 und zur Eingangswelle bzw. zum Drehkolben 2 bewegt werden. Das Verschlusselement wird durch die zwei Federn 6a1 und 6a2 in seiner Ausgangsposition (Gleichgewichtslage) gehalten. Durch eine Bewegung des Verschlussteilabschnitts 3 des Ventils in seiner Führung innerhalb des gratförmigen Gehäuseabschnitts 1a kann die Öffnungsweite des Ventilspalts D und somit die Bedämpfung in der Arbeitseinheit beeinflusst werden. Da sich die Spule 4 auf derselben Welle wie der Drehkolben befindet, wird diese bei einer Drehbewegung des Kolbens ebenfalls bewegt.

Die Relativbewegung von Verschlusselement 3 und Gehäuse 1 wird durch eine magnetfeldabhängige Scherung (Drehscherung) der MRF, welche sich im Zwischenraum Z zwischen den beiden Oberflächen O1 und O2 befindet, verursacht. Wirkt kein Magnetfeld im Zwischenraum Z, wird das Verschlusselement 3 durch die Federn 6 in seine Ausgangsposition bewegt bzw. dort gehalten.

## Patentansprüche

1. Dämpfungsvorrichtung aufweisend
ein erstes Steuerelement mit einer ersten Oberfläche (O1) und ein zweites Steuerelement mit einer zweiten Oberfläche (O2), wobei die beiden Steuerelemente mit ihren beiden Oberflächen relativ zueinander bewegbar sind, einen zumindest teilweise mit einem magnetorheologischen und/oder elektrorheologischen Material (M) gefüllten, zwischen der ersten und der zweiten O-berfläche angeordneten Raumbereich (Zwischenraum Z), und einen Felderzeuger (4), mit welchem in zumindest einem Teilbereich des materialgefüllten Teils des Zwischenraums ein magnetisches und/oder elektrisches Feld erzeugbar ist, sowie
ein zwei Kammern (K1, K2) aufweisendes Gehäuse (1), in welchem eine relativ zum Gehäuse bewegliche Kolbeneinheit (2) und eine relativ zur Kolbeneinheit bewegliche Verschlusseinheit (3) angeordnet sind,
wobei die Kolbeneinheit und die Verschlusseinheit eine die beiden Kammern verbindende Durchströmungsöffnung (D) ausbilden, durch welche mittels einer Relativbewegung von Kolbeneinheit und Gehäuse ein Fluid (F) zwischen den beiden Kammern verschiebbar ist, wobei der Öffnungsquerschnitt der Durchströmungsöffnung mittels einer Relativbewegung von Kolbeneinheit und Verschlusseinheit (3) veränderbar ist und wobei die Verschlusseinheit und eines der Steuerelemente (O1) so gekoppelt sind, dass die Relativbewegung von Kolbeneinheit und Verschlusseinheit mittels der Feldstärke im Zwischenraum steuerbar ist.

2. Dämpfungsvorrichtung aufweisend
ein erstes Steuerelement mit einer ersten Oberfläche (O1) und ein zweites Steuerelement mit einer zweiten Oberfläche (O2), wobei die beiden Steuerelemente mit ihren beiden Oberflächen relativ zueinander bewegbar sind, einen zumindest teilweise mit einem magnetorheologischen und/oder elektrorheologischen Material (M) gefüllten, zwischen der ersten und der zweiten Oberfläche angeordneten Raumbereich (Zwischenraum Z), und einen Felderzeuger (4), mit welchem in zumindest einem Teilbereich des materialgefüllten Teils des Zwischenraums ein magnetisches und/oder elektrisches Feld erzeugbar ist, sowie
ein zwei Kammern (K1, K2) aufweisendes Gehäuse (1), in welchem eine relativ zum Gehäuse drehbare Kolbeneinheit (2) und eine relativ zum Gehäuse und zur Kolbeneinheit bewegliche Verschlusseinheit (3) angeordnet sind,
wobei das Gehäuse und die Verschlusseinheit eine die beiden Kammern verbindende Durchströmungsöffnung (D) ausbilden, durch welche mittels einer Relativbewegung von Kolbeneinheit und Gehäuse ein Fluid (F) zwischen den beiden Kammern verschiebbar ist, wobei der Öffnungsquerschnitt der Durchströmungsöffnung mittels einer Relativbewegung von Verschlusseinheit und Gehäuse veränderbar ist und wobei die Relativbewegung von Verschlusseinheit und Gehäuse mittels der Relativbewegung von Kolbeneinheit und Gehäuse und der Feldstärke im Zwischenraum steuerbar ist.

3. Dämpfungsvorrichtung nach einem der vorhergehenden Ansprüche,
***dadurch gekennzeichnet, dass***
in der Konfiguration der Dämpfungsvorrichtung gemäß Anspruch 2 eine Kopplung der Verschlusseinheit (3) mit einem (O1) der beiden Steuerelemente erfolgt ist,
oder
dass in der vorbeschriebenen Konfiguration dieses Anspruchs oder in der Konfiguration der Dämpfungsvorrichtung gemäß Anspruch 1 eine Kopplung der Kolbeneinheit (2) mit dem anderen (02) der beiden Steuerelemente erfolgt ist.

4. Dämpfungsvorrichtung nach einem der vorhergehenden Ansprüche,
***gekennzeichnet durch***
mindestens eine mechanische Kopplung und/oder dadurch, dass mindestens eine der Kopplungen über eine starre, mechanische Verbindung erfolgt,
und/oder
**dadurch**, dass eines der Steuerelemente als Teil der Verschlusseinheit oder als Teil der Kolbeneinheit ausgebildet ist.

5. Dämpfungsvorrichtung nach einem der vorhergehenden Ansprüche,
***dadurch gekennzeichnet, dass***
die beiden Steuerelemente so angeordnet und/oder ausgebildet sind, dass die Relativbewegung der beiden Oberflächen zueinander für das magnetorheologische und/oder elektrorheologische Material im Zwischenraum als Scherbewegung (seitliches gegeneinander Verschieben der beiden 0-berflächen), als Drehscherbewegung (gegeneinander Verdrehen der beiden Oberflächen um eine gemeinsame Drehachse) und/oder als Quetschbewegung (aufeinander Zu- und voneinander Wegbewegen der beiden Oberflächen) ausgebildet ist.

6. Dämpfungsvorrichtung nach einem der vorhergehenden Ansprüche,
***gekennzeichnet durch***
mindestens eine Federverbindung (6a) zwischen Verschlusseinheit und Gehäuse und/oder mindestens eine Federverbindung (6b) zwischen Verschlusseinheit und Kolbeneinheit, wobei mindestens eine dieser Federverbindungen bevorzugt eine Zug-, eine Druck- oder eine Zug-Druck-Feder ist.

7. Dämpfungsvorrichtung nach einem der vorhergehenden Ansprüche,
***dadurch gekennzeichnet, dass***
die relativ zueinander bewegbaren Oberflächen oder Steuerelemente als bei konstantem Abstand von Plattenebene zu Plattenebene seitlich gegeneinander verschiebbare oder als aufeinander zuund voneinander wegbewegbare, vorteilhafterweise planparallele Platten oder als konzentrisch angeordnete, gegeneinander entlang einer gemeinsamen Achse verschiebbare Zylinderelemente ausgebildet sind.

8. Dämpfungsvorrichtung nach einem der vorhergehenden Ansprüche,
***gekennzeichnet durch***
einen Felderzeuger in Form mindestens eines Magneten, insbesondere eines Elektromagneten oder eines Permanentmagneten, und einen **durch** diesen in der Dämpfungsvorrichtung ausgebildeten, den Zwischenraum umfassenden Magnetkreis, wobei bevorzugt mindestens ein Elektromagnet und mindestens ein Permanentmagnet im Magnetkreis vorhanden ist,
und/oder
**durch** einen Felderzeuger in Form mindestens eines Elektrodenpaares samt mindestens einer Spannungsquelle, wobei bevorzugt die relativ zueinander bewegbaren Oberflächen oder Teile der Steuerelemente als Elektroden ausgebildet sind
und/oder
**dadurch**, dans der Fel derzeuger fest mit der Verschlusseinheit verbunden ist oder dass der Felderzeuger fest mit der Kolbeneinheit verbunden ist.

9. Dämpfungsvorrichtung nach einem der vorhergehenden Ansprüche,
***gekennzeichnet durch***
einen Sensor ausgebildet und/oder angeordnet zum Erfassen der Relativposition von Verschlusseinheit und Kolbeneinheit und/oder der Relativposition von Verschlusseinheit und Gehäuse sowie bevorzugt **durch** eine Regelkreiseinheit, mit der anhand erfasster Relativpositionswerte der Öffnungsquerschnitt bestimmbar und auf der Basis des bestimmten Öffnungsquerschnitts die Feldstärke des magnetischen und/oder des elektrischen Feldes regelbar ist.

10. Dämpfungsvorrichtung nach einem der vorhergehenden Ansprüche,
***dadurch gekennzeichnet, dass***
das Fluid eine nicht-magnetorheologische und eine nicht-elektrorheologische (nicht feldsteuerbare) Flüssigkeit ist oder dass das Fluid ein Gas ist, wobei das Fluid zumindest teilweise aus derselben Flüssigkeit besteht, welche als Trägerflüssigkeit des magnetorheologischen und/oder elektrorheologischen Materials dient.

11. Dämpfungsvorrichtung nach einem der vorhergehenden Ansprüche,
***dadurch gekennzeichnet, dass***
das magnetorheologische Material eine magnetorheologische Flüssigkeit, ein magnetorheologisches Gel, ein magnetorheologisches Elastomer und/oder einen magnetorheologischen Schaum umfasst und/oder dass das elektrorheologische Material eine elektrorheologische Flüssigkeit, ein elektrorheologisches Gel, ein elektrorheologisches Elastomer und/oder einen elektrorheologischen Schaum umfasst.

12. Dämpfungsvorrichtung nach einem der vorhergehenden Ansprüche,
***dadurch gekennzeichnet, dass***
die Kolbeneinheit nach Anspruch 1 als Linearschwinger ausgebildet ist und/oder dass die Kolbeneinheit mindestens ein Kolbenelement (2a) und mindestens eine Kolbenstange (2b), bevorzugt eine mehrteilige, insbesondere eine zweiteilige Kolbenstange, umfasst
oder
dass die drehbare Kolbeneinheit nach Anspruch 2 als Drehschwinger ausgebildet ist.

13. Dämpfungsvorrichtung nach einem der vorhergehenden Ansprüche,
***gekennzeichnet durch***
eine Ausbildung als Stoßdämpfer oder Schwingungsdämpfer, insbesondere als elektrisch steuerbarer Stoßdämpfer oder Schwingungsdämpfer.

14. Magnetorheologisches und/oder elektrorheologisches Dämpfungsverfahren, bei dem eine Bewegung einer Kolbeneinheit innerhalb eines Gehäuses bedämpft wird, indem ein magnetisches und/oder ein elektrisches Feld in einem zumindest teilweise mit einem magnetorheologischen und/oder elektrorheologischen Material gefüllten Zwischenraum erzeugt wird,
***dadurch gekennzeichnet, dass***
eine Dämpfungsvorrichtung nach einem der vorhergehenden Ansprüche eingesetzt wird.

15. Verwendung einer Dämpfungsvorrichtung nach einem der vorhergehenden Dämpfungsvorrichtungsansprüche als Stoßdämpfer oder Schwingungsdämpfer, insbesondere als elektrisch steuerbarer Stoßdämpfer oder Schwingungsdämpfer.

## Claims

1. Damping device having
a first control element having a first surface (O1) and a second control element having a second surface (O2), the two control elements being movable relative to each other with their two surfaces, a spatial region (intermediate space Z) which is filled at least partially with a magnetorheological and/or electrorheological material (M) and is disposed between the first and the second surface, and a field producer (4) with which a magnetic and/or electrical field is producible in at least one partial region of the material-filled part of the intermediate space, and also
a housing (1) which has two chambers (K1, K2) and in which there are disposed a piston unit (2) which is movable relative to the housing and a closing unit (3) which is movable relative to the piston unit,
the piston unit and the closing unit forming a throughflow opening (D) which connects the two chambers and through which, by means of a relative movement of the piston unit and the housing, a fluid (F) is displaceable between the two chambers, the opening cross-section of the throughflow opening being changeable by means of a relative movement of the piston unit and the closing unit (3), and the closing unit and one of the control elements (O1) being coupled such that the relative movement of the piston unit and the closing unit is controllable by means of the field strength in the intermediate space.

2. Damping device having
a first control element having a first surface (O1) and a second control element having a second surface (O2), the two control elements being movable relative to each other with their two surfaces, a spatial region (intermediate space Z) which is filled at least partially with a magnetorheological and/or electrorheological material (M) and is disposed between the first and the second surface, and a field producer (4) with which a magnetic and/or electrical field is producible in at least one partial region of the material-filled part of the intermediate space, and also
a housing (1) which has two chambers (K1, K2) and in which there are disposed a piston unit (2) which is rotatable relative to the housing and a closing unit (3) which is movable relative to the housing and to the piston unit,
the housing and the closing unit forming a throughflow opening (D) which connects the two chambers and through which, by means of a relative movement of the piston unit and the housing, a fluid (F) is displaceable between the two chambers, the opening cross-section of the throughflow opening being changeable by means of a relative movement of the closing unit and the housing and the relative movement of the closing unit and the housing being controllable by means of the relative movement of the piston unit and the housing and the field strength in the intermediate space.

3. Damping device according to one of the preceding claims,
***characterised in that***
in the configuration of the damping device according to claim 2, coupling of the closing unit (3) with one (O1) of the two control elements is effected,
or
**in that**, in the above-described configuration of this claim or in the configuration of the damping device according to claim 1, coupling of the piston unit (2) with the other (02) of the two control elements is effected.

4. Damping device according to one of the preceding claims,
***characterised by***
at least one mechanical coupling and/or in that at least one of the couplings is effected via a rigid, mechanical connection,
and/or
in that one of the control elements is configured as part of the closing unit or as part of the piston unit.

5. Damping device according to one of the preceding claims,
***characterised in that***
the two control elements are disposed and/or configured such that the relative movement of the two surfaces relative to each other for the magnetorheological and/or electrorheological material in the intermediate space is configured as a shear movement (lateral displacement of the two surfaces relative to each other), as rotary shear movement (rotation of the two surfaces relative to each other around a common axis of rotation) and/or as a squeezing movement (movement of the two surfaces towards each other and away from each other).

6. Damping device according to one of the preceding claims,
***characterised by***
at least one resilient connection (6a) between the closing unit and the housing and/or at least one resilient connection (6b) between the closing unit and the piston unit, at least one of these resilient connections being preferably a tension-, a compression- or a compression-tension spring.

7. Damping device according to one of the preceding claims,
***characterised in that***
the surfaces or control elements which are movable relative to each other are configured as plates which are displaceable laterally relative to each other at a constant spacing of plate plane to plate plane or which are movable towards each other and away from each other and advantageously are plane-parallel, or are configured as cylinder elements which are disposed concentrically and are displaceable relative to each other along a common axis.

8. Damping device according to one of the preceding claims,
***characterised by***
a field producer in the form of at least one magnet, in particular an electromagnet or a permanent magnet, and a magnetic circuit which is configured by the latter in the damping device and encloses the intermediate space, preferably at least one electromagnet and at least one permanent magnet being present in the magnetic circuit,
and/or
by a field producer in the form of at least one pair of electrodes together with at least one voltage source, preferably the surfaces or parts of the control elements which are movable relative to each other being configured as electrodes
and/or
in that the field producer is connected rigidly to the closing unit or in that the field producer is connected rigidly to the piston unit.

9. Damping device according to one of the preceding claims,
***characterised by***
a sensor which is configured and/or disposed for detecting the relative position of the closing unit and the piston unit and/or the relative position of the closing unit and the housing and also preferably by a control circuit unit with which the opening cross-section is determinable by means of detected relative position values and the field strength of the magnetic and/or of the electrical field is controllable on the basis of the determined opening cross-section.

10. Damping device according to one of the preceding claims,
***characterised in that***
the fluid is a non-magnetorheological and a non-electrorheological (non-field-controllable) fluid or **in that** the fluid is a gas, the fluid consisting at least partially of the same liquid which serves as carrier liquid of the magnetorheological and/or electrorheological material.

11. Damping device according to one of the preceding claims,
***characterised in that***
the magnetorheological material comprises a magnetorheological liquid, a magnetorheological gel, a magnetorheological elastomer and/or a magnetorheological foam and/or **in that** the electrorheological material comprises an electrorheological liquid, an electrorheological gel, an electrorheological elastomer and/or an electrorheological foam.

12. Damping device according to one of the preceding claims,
***characterised in that***
the piston unit according to claim 1 is configured as a linear oscillator and/or **in that** the piston unit comprises at least one piston element (2a) and at least one piston rod (2b), preferably a multipart, in particular a two-part, piston rod,
or
**in that** the rotatable piston unit according to claim 2 is configured as rotary oscillator.

13. Damping device according to one of the preceding claims,
***characterised by***
a configuration as shock absorber or oscillation damper, in particular as electrically controllable shock absorber or oscillation damper.

14. Magnetorheological and/or electrorheological damping method in which a movement of a piston unit inside a housing is damped by a magnetic and/or an electrical field being produced in an intermediate space which is filled at least partially with a magnetorheological and/or electrorheological material,
***characterised in that***
a damping device according to one of the preceding claims is used.

15. Use of a damping device according to one of the preceding damping device claims as shock absorber or oscillation damper, in particular as electrically controllable shock absorber or oscillation damper.

## Revendications

1. Dispositif d'amortissement présentant
un premier élément de commande doté d'une première surface (01) et un deuxième élément de commande doté d'une deuxième surface (02), les deux éléments de commande pouvant être déplacés l'un par rapport à l'autre par leurs deux surfaces, une zone spatiale (espace intermédiaire Z) remplie au moins en partie d'un matériau (M) magnétorhéologique et/ou électrorhéologique, disposée entre la première et la deuxième surface, et un générateur de champs (4), à l'aide duquel un champ magnétique et/ou électrique peut être généré dans au moins une zone partielle de la partie, remplie de matériau, de l'espace intermédiaire, ainsi
un boîtier (1) présentant deux chambres (K1, K2), dans lequel sont disposées une unité piston (2) mobile par rapport au boîtier et une unité de fermeture (3) mobile par rapport à l'unité piston,
l'unité piston et l'unité de fermeture formant une ouverture de passage (D) reliant les deux chambres, par laquelle un fluide (F) peut être déplacé entre les deux chambres au moyen d'un mouvement relatif de l'unité piston et du boîtier, la section transversale d'ouverture de l'ouverture de passage pouvant être modifiée au moyen d'un mouvement relatif de l'unité piston et de l'unité de fermeture (3), et l'unité de fermeture et un des éléments de commande (01) étant couplés de telle manière que le mouvement relatif de l'unité piston et de l'unité de fermeture peut être commandé dans l'espace intermédiaire au moyen de l'intensité de champ.

2. Dispositif d'amortissement présentant
un premier élément de commande doté d'une première surface (01) et un deuxième élément de commande doté d'une deuxième surface (02), les deux éléments de commande pouvant être déplacés l'un par rapport à l'autre par leurs deux surfaces, une zone spatiale (espace intermédiaire Z) remplie au moins en partie d'un matériau (M) magnétorhéologique et/ou électrorhéologique, disposée entre la première surface et la deuxième surface, et un générateur de champ (4), à l'aide duquel un champ magnétique et/ou électrique peut être généré dans au moins une zone partielle de la partie, remplie de matériau, de l'espace intermédiaire, ainsi
un boîtier (1) présentant deux chambres (K1, K2), dans lequel sont disposées une unité piston (2) pouvant tourner par rapport au boîtier et une unité de fermeture (3) mobile par rapport au boîtier et par rapport à l'unité piston,
le boîtier et l'unité de fermeture formant une ouverture de passage (D) reliant les deux chambres, par laquelle un fluide (F) peut être déplacé entre les deux chambres au moyen d'un mouvement relatif de l'unité piston et du boîtier, la section transversale d'ouverture de l'ouverture de passage pouvant être modifiée au moyen d'un mouvement relatif de l'unité de fermeture et du boîtier et le mouvement relatif de l'unité de fermeture et du boîtier pouvant être commandé dans l'espace intermédiaire au moyen du mouvement relatif de l'unité piston et du boîtier et au moyen de l'intensité de champ.

3. Dispositif d'amortissement selon l'une quelconque des revendications précédentes,
**caractérisé**
**en ce que** dans la configuration du dispositif d'amortissement selon la revendication 2, un couplage entre l'unité de fermeture (3) et l'un (01) des deux éléments de commande est réalisé,
ou
**en ce que** dans la configuration décrite ci-avant dans ladite revendication ou dans la configuration du dispositif d'amortissement selon la revendication 1, un couplage entre l'unité piston (2) et l'autre (02) des deux éléments de commande est réalisé.

4. Dispositif d'amortissement selon l'une quelconque des revendications précédentes,
**caractérisé**
**par** au moins un couplage mécanique, et/ou en ce qu'au moins un des couplages est réalisé au moyen d'une liaison fixe, mécanique,
et/ou
en ce que l'un des éléments de commande est réalisé en tant qu'une partie de l'unité de fermeture ou en tant qu'une partie de l'unité piston.

5. Dispositif d'amortissement selon l'une quelconque des revendications précédentes,
**caractérisé en ce**
**que** les deux éléments de commande sont disposés et/ou réalisés de telle manière que le mouvement relatif des deux surfaces l'une par rapport à l'autre se présente pour le matériau magnétorhéologique et/ou électrorhéologique, dans l'espace intermédiaire, sous la forme d'un mouvement de cisaillement (déplacement par coulissement latéral des deux surfaces l'une par rapport à l'autre), sous la forme d'un mouvement de cisaillement par rotation (rotation des deux surfaces l'une par rapport à l'autre autour d'un axe de rotation commun) et/ou sous la forme d'un mouvement de compression (déplacement des deux surfaces de manière à se rapprocher et à s'éloigner l'une de l'autre).

6. Dispositif d'amortissement selon l'une quelconque des revendications précédentes,
**caractérisé**
**par** au moins une liaison à ressort (6a) entre l'unité de fermeture et le boîtier et/ou au moins une liaison à ressort (6b) entre l'unité de fermeture et l'unité piston, au moins une desdites liaisons à ressort étant de préférence un ressort de traction, un ressort de pression ou un ressort de traction-pression.

7. Dispositif d'amortissement selon l'une quelconque des revendications précédentes,
**caractérisé en ce**
**que** les surfaces pouvant être déplacées l'une par rapport à l'autre ou les éléments de commande sont réalisés sous la forme de plaques pouvant être déplacées par coulissement latéralement les unes par rapport aux autres à une distance constante de plan de plaque à plan de plaque ou sous la forme de plaques avantageusement parallèles en plan, pouvant être rapprochées ou éloignées les unes des autres ou sous la forme d'éléments de cylindre disposés de manière concentrique, pouvant être déplacés par coulissement les uns par rapport aux autres le long d'un axe commun.

8. Dispositif d'amortissement selon l'une quelconque des revendications précédentes,
**caractérisé**
**par** un générateur de champ se présentant sous la forme d'au moins un aimant, en particulier d'un électroaimant ou d'un aimant permanent, et par un circuit magnétique réalisé par ce dernier dans le dispositif d'amortissement, comprenant l'espace intermédiaire, au moins un électroaimant et au moins un aimant permanent étant de préférence présents dans le circuit magnétique,
et/ou
par un générateur de champs se présentant sous la forme d'au moins une paire d'électrodes ainsi qu'au moins une source de tension, les surfaces ou parties, pouvant être déplacées les unes par rapport aux autres, des éléments de commande étant réalisées de préférence sous la forme d'électrodes,
et/ou
en ce que le générateur de champ est relié de manière solidaire à l'unité de fermeture, ou en ce que le générateur de champ est relié de manière solidaire à l'unité piston.

9. Dispositif d'amortissement selon l'une quelconque des revendications précédentes,
**caractérisé**
**par** un capteur réalisé et/ou disposé pour détecter la position relative de l'unité de fermeture et de l'unité piston et/ou la position relative de l'unité de fermeture et du boîtier, ainsi que de préférence et par une unité de circuit de régulation, laquelle permet, à l'aide des valeurs de position relative détectées, de déterminer la section transversale d'ouverture et de réguler, sur la base de la section transversale d'ouverture déterminée, l'intensité de champ du champ magnétique et/ou électrique.

10. Dispositif d'amortissement selon l'une quelconque des revendications précédentes,
**caractérisé en ce**
**que** le fluide est un liquide non magnétorhéologique et non électrorhéologique (ne pouvant pas être commandé par le champ), ou en ce que le fluide est un gaz, le fluide étant constitué au moins en partie du même liquide que celui faisant office de liquide vecteur du matériau magnétorhéologique et/ou électrorhéologique.

11. Dispositif d'amortissement selon l'une quelconque des revendications précédentes,
**caractérisé en ce**
**que** le matériau magnétorhéologique comprend un liquide magnétorhéologique, un gel magnétorhéologique, un élastomère magnétorhéologique et/ou une mousse magnétorhéologique, et/ou en ce que le matériau électrorhéologique comprend un liquide électrorhéologique, un gel électrorhéologique, un élastomère électrorhéologique et/ou une mousse électrorhéologique.

12. Dispositif d'amortissement selon l'une quelconque des revendications précédentes,
**caractérisé en ce**
**que** l'unité piston selon la revendication 1 est réalisée sous la forme d'un oscillateur linéaire, et/ou en ce que l'unité piston comprend au moins un élément piston (2a) et au moins une tige de piston (2b), de préférence une tige de piston en plusieurs parties, en particulier une tige de piston en deux parties,
ou
en ce que l'unité piston rotative selon la revendication 2 se présente sous la forme d'un oscillateur rotatif.

13. Dispositif d'amortissement selon l'une quelconque des revendications précédentes,
**caractérisé**
**par** une réalisation sous la forme d'un amortisseur de chocs ou d'un amortisseur de vibrations, en particulier sous la forme d'un amortisseur de chocs ou d'un amortisseur de vibrations pouvant être commandé de manière électrique.

14. Procédé d'amortissement magnétorhéologique et/ou électrorhéologique, dans lequel un mouvement d'une unité piston est amorti à l'intérieur d'un boîtier en ce qu'un champ magnétique et/ou un champ électrique est/sont généré(s) dans un espace intermédiaire rempli au moins en partie d'un matériau magnétorhéologique et/ou électrorhéologique,
**caractérisé en ce**
**qu'**un dispositif d'amortissement selon l'une quelconque des revendications précédentes est utilisé.

15. Utilisation d'un dispositif d'amortissement selon l'une quelconque des revendications précédentes, en tant qu'amortisseur de chocs ou en tant qu'amortisseur de vibrations, en particulier en tant qu'amortisseur de chocs ou en tant qu'amortisseur de vibrations pouvant être commandé électriquement.
